# EUROPÄISCHE PATENTSCHRIFT

(11) **EP 3 146 215 B1**
(45) Veröffentlichungstag und Bekanntmachung des Hinweises auf die Patenterteilung: **26.12.2018**
(21) Anmeldenummer: 15739505.4
(22) Anmeldetag: 28.04.2015
(51) Int. Cl.: F04D 25/02, F04C 18/16, F04C 23/00, F04D 17/12, F04D 27/02, F04C 29/00

(54) **MEHRSTUFIGE VERDICHTERANLAGE MIT HYDRODYNAMISCHER STRÖMUNGSKUPPLUNG**
MULTI-STAGE COMPRESSOR WITH HYDRODYNAMIC COUPLING
COMPRESSEUR À PLUSIEURS ÉTAGES AVEC EMBRAYAGE HYDRODYNAMIQUE

(30) Priorität: 20.05.2014 DE 102014107126
(43) Veröffentlichungstag der Anmeldung: 29.03.2017
(73) Patentinhaber: Wenzel, Harald, 63699 Kefenrod (DE)
(72) Erfinder: Wenzel, Harald, 63699 Kefenrod (DE)
(74) Vertreter: Mackert, Andreas
(86) Internationale Anmeldenummer: PCT/DE2015/100173
(87) Internationale Veröffentlichungsnummer: WO 2015/176710

(56) Entgegenhaltungen:
- DE-A1- 19 932 433
- DE-B3-102008 061 711
- JP-A- H02 238 185
- US-A- 3 922 110

## Beschreibung

Die Erfindung betrifft eine Verdichteranlage zur Erzeugung eines komprimierten Gases gemäß dem Oberbegriff des Anspruches 1.

Die in der Industrie und dem produzierenden Gewerbe eingesetzten Verdichteranlagen verbrauchen einen erheblichen Anteil elektrischer Energie bzw. bei mobilen Anlagen durch den Einsatz von Verbrennungsmotoren erhebliche Mengen der limitierten natürlichen Rohstoffe auf Basis von Erdöl oder auch nachwachsenden Energieträgern, wie z.B. Biokraftstoffen. Bedingt durch die steigenden Energiekosten und die durch den Verbrauch der Energie erzeugte Umweltbelastung sind immer mehr Anstrengungen zu unternehmen, den Energieverbrauch zu senken und damit gleichzeitig die Kosten und den Verbrauch an natürlichen Ressourcen zu senken.

Verdichteranlagen zur Erzeugung von komprimierter Luft sind bei den im Einsatz befindlichen Verdichteranlagen die am meisten verbreiteten Anlagen. Aber auch Anlagen zur Erzeugung von Prozessgasen jeglicher Art oder zur Förderung von Gasen über größere Distanzen werden als Verdichteranlagen ausgeführt, deren Antriebsleistungen in den zweistelligen Megawattbereich vordringen. In den Industrienationen kann man daher davon ausgehen das ca. 10% der gesamten verbrauchten elektrischen Energie aller Industrieunternehmen von Verdichteranlagen verbraucht wird. Es ist daher unschwer ersichtlich, dass es besonders wichtig ist, in diesem Bereich durch neue Entwicklungen und Innovationen den Wirkungsgrad zu verbessern und damit Energie einzusparen.

Bei heutigen Verdichteranlagen tritt das Problem auf, dass diese sich nur ungenügend in ihrer Liefermenge bspw. an Druckluft regulieren lassen. Dies bedingt insbesondere im Teillastbereich eine unzureichende Effizienz und somit einen unnötigen Energieverbrauch.

Gebräuchliche Elektromotoren sind nur in der Lage bei einer Drehzahl betrieben zu werden, welche von der nicht beeinflussbaren Netzfrequenz des verfügbaren elektrischen Stromes abhängt. Diese Art der Verdichteranlagen arbeitet somit nur dann effizient, wenn sie genau die Luftmenge abgeben, die Ihrer Drehzahl entspricht. Als Regelungsalternativen bleiben hierbei nur das Ausschalten der Anlage bzw. das Schließen des Ansaugreglers was gleichbedeutend mit einer Reduktion des Volumenstromes auf nahezu Null ist. Beide Regelungsarten haben bezüglich der Effizienz jedoch erhebliche Nachteile.

Das Schließen des Ansaugreglers führt zu einer Reduzierung des Volumenstroms auf nahezu 0, die notwendige Antriebsleistung ist jedoch weiterhin sehr hoch und in der Regel mehr als 50% der Vollastleistung. Auch eine Absenkung des Behälterdruckes führt nicht zu einer wesentlichen Verbesserung, da diese erst nach einer gewissen Zeitverzögerung startet und auch eine bestimmte Zeit benötigt, um den Behälterdruck zu reduzieren. Auch mit diesem reduzierten Behälterdruck ist die Leistungsaufnahme noch bei ca. 25% der Volllastleistung und das abgeblasene Behältervolumen ist vernichtet.

Das sofortige Ausschalten des Antriebsmotors ist zwar möglich, jedoch ist die Zahl der erneuten Starts, insbesondere bei Elektromotoren, begrenzt. Somit ist eine beliebige Anzahl von Starts nicht möglich.

Eine weitere Möglichkeit bietet die Drosselregelung. Bedingt durch ihre Wirkungsweise, der Reduzierung des Ansaugdruckes, ist diese Regelungsart auch extrem ineffizient.

Eine Alternative für die Problematik der unzureichenden energetisch sinnvollen Regelung des Volumenstromes bietet die fortschreitende Technik in Form von frequenzgeregelten Antrieben. Hierbei kann in technisch festgelegten Grenzen die Drehzahl des Antriebsmotors geregelt werden. Diese Art der Regelung des Volumenstromes ist jedoch relativ kostenintensiv und auch bezüglich der Effizienz nicht optimal einsetzbar. Insbesondere im Teillastbereich ergeben sich Nachteile durch die geringere Effizienz des Frequenzumrichters und des Elektromotors.

Bei den häufig eingesetzten Schraubenverdichtern mit oder ohne Flüssigkeitseinspritzung kommt es bei einer Kombination mit frequenzgeregelten Antrieben zusätzlich zu einer deutlichen Verschlechterung des Wirkungsgrades, da diese Art des Verdichters eine über den Drehzahlbereich unterschiedliche Effizienz aufweist. Bei einer konstanten Antriebsdrehzahl hat man die Möglichkeit den Schraubenverdichter für diese Antriebsdrehzahl zu optimieren. Wird dieser Drehzahlbereich unter- oder überschritten geht der Wirkungsgrad deutlich zurück. Bei einer geringen Drehzahl kommt es zu einer verstärkten Rückströmung des bereits komprimierten Gases. Bei einer höheren Drehzahl kommt es insbesondere bei den Schraubenverdichtern mit Flüssigkeitseinspritzung zu deutlichen hydraulischen Verlusten.

In Verdichteranlagen mit einem Antrieb durch einen Verbrennungsmotor ist eine gewisse Volumenstromregelung durch Drehzahländerung möglich. Allerdings wird diese durch den nahezu konstanten Drehmomentbedarf, des fast ausschließlich eingesetzten flüssigkeitseingespritzten Schraubenverdichters, stark begrenzt. Die hieraus erzielte Volumenstromregelung beträgt meistens nur 20 bis 40% und ist daher auch sehr unwirtschaftlich. Bei diesen Verdichteranlagen liegt der Kraftstoffverbrauch ohne dass Druckluft entnommen wird immer noch bei 50% des Verbrauches bei voller Drehzahl und maximalen Betriebsdruck.

Neben der Volumenstromregelung lässt sich auch eine Regelung des Betriebsdruckes bei heutigen Kompressoranlagen nicht optimal erreichen. Ein höherer Betriebsdruck hat bei gleichem Volumenstrom der Anlage, bedingt durch eine konstante Antriebsdrehzahl, einen höheren Drehmomentbedarf zur Folge und der Antriebsmotor kann dieses mehr an Drehmoment nicht zur Verfügung stellen. Dies bedeutet in der Praxis, eine bedeutende Einschränkung hinsichtlich der Flexibilität des Kompressoreinsatzes. Eine Erhöhung des Betriebsdruckes ist praktisch immer nur durch einen Umbau der Anlage zu erreichen oder dadurch, dass eine Anlage mit einem höheren für den Regelbetrieb überdimensionierten Betriebsdruck eingesetzt wird, welcher dann entsprechend reduziert werden kann.

Bei einer solchen Vorgehensweise ist die Investition in die Verdichteranlage jedoch deutlich höher und die Flexibilität immer noch erheblich eingeschränkt, da bei dem niedrigeren Betriebsdruck keine Erhöhung des Volumenstromes sondern lediglich eine Leistungsreduktion erfolgt. Die Anlage kann daher nicht vollständig im Rahmen ihrer Leistungsfähigkeit genutzt werden. Dies gilt insbesondere bei den eingesetzten Schraubenverdichtern.

Eine höhere Liefermenge ist insbesondere für Schraubenverdichter kritisch, da hier sowohl technische Probleme bezüglich eines begrenzten Drehzahlbereiches als auch bezüglich der Herstellbarkeit mit begrenzten Läuferdurchmessern auftreten. Ab einer Antriebsleistung von etwa 250 bis 315 kW können diese Grenzen erreicht werden.

Insbesondere auch die ökonomischen Grenzen sind kritisch zu bewerten, da die Herstellung durch relativ geringe Stückzahlen und einen erheblichen Aufwand erschwert werden. Ab dem zuvor genannten Leistungsbereich beginnen auch andere Verdichtungssysteme ihren Einzug zu halten, wie z.B. mehrstufige Turboverdichter. Diese Turboverdichter zeichnen sich durch einen besseren Wirkungsgrad im Vergleich zu Schraubenverdichtern aus. Die genannten Leistungsbereiche stellen keine grundsätzliche Grenze dar, können jedoch für kleinere und mittelgroße Hersteller zu einer unüberwindbaren Grenze werden.

Ein weiterer nicht unwesentlicher Punkt sind die geographischen Unterschiede und Einsatzbedingungen die sich aus einem weltweiten Vertrieb dieser Anlagen ergeben. Die Auslegung einer Verdichteranlage erfolgt üblicherweise nach den Gesichtspunkten der vorgesehenen Anwendung. Es ist hierbei üblich, sich Grenzen der Einsatzbedingungen zu setzten um eine solche Verdichteranlage nicht unnötig in ihren Herstellkosten zu verteuern. Diese Einsatzbedingungen werden durch eine maximale klimatische Einsatztemperatur und eine maximale Einsatzhöhe begrenzt. Durch eine zu hohe Einsatztemperatur kann die Kühlung der Verdichteranlage nicht ausreichen. Sowohl der Antriebsmotor als auch der eigentliche Verdichter haben ihre Einsatzgrenzen der Betriebstemperatur und können bei nicht ausreichender Kühlung beschädigt oder in ihrer Lebensdauer deutlich eingeschränkt werden, falls die Betriebstemperatur über einen längeren Zeitraum sehr nahe an der kritischen Einsatzgrenze liegt.

Gleiches gilt sinngemäß auch für den Einsatz in größeren Höhen. Bedingt durch den geringeren Luftdruck kann es bei Verbrennungsmotoren zu einer Überhitzung kommen da kein ausreichende Menge Sauerstoff zur Verbrennung zur Verfügung steht. Auch die ausreichende Kühlung ist gefährdet, da durch die geringere Luftdichte bei gleichem Kühlluftvolumenstrom eine Reduzierung des Massenstromes auftritt. Die Kühlung wird dadurch erheblich reduziert. Dies gilt sowohl für den Antriebsmotor als auch den eigentlichen Verdichter. Bei einer Höhe von 2000 m über dem Meeresspiegel kann dies bereits zu einer Reduzierung der Kühlleistung von bis zu 20% führen. Sollen Verdichteranlagen für solche Einsatzbedingungen gebaut werden, so muss eine größere Kühlanlage eingebaut werden, und gegebenenfalls wird auch ein größerer Antriebsmotor notwendig sein um eine Überlastung zu vermeiden. Beides ist mit deutlich höheren Kosten verbunden.

Aus der Veröffentlichung DE 2848030 A1 ist ein Verfahren zur mehrstufigen Verdichtung von Gasen, insbesondere ölfreier Luft, bekannt, wobei hier der gesamte Verdichtungsvorgang derart auf mehrere Stufen aufgeteilt ist, dass die einzelnen Verdichter im Bestpunkt betrieben werden und dabei die geringste Leistungsaufnahme erzielen, dass bei Teillast nur die erste und die letzte Verdichterstufe unter gegenüber der Nennlast stärker geänderten Bedingungen betrieben werden, während die Druckverhältnisse, die Volumenströme und somit der optimale Betrieb bei den mittleren Stufen gleichbleiben und bei Laständerung die Mengenanpassung in der ersten Verdichterstufe und in der letzten Stufe die Druckanpassung an den Verbraucher stattfindet.

Allerdings zeigt sich hier als Nachteil, das der mehrstufige Kompressor zur Durchführung dieses Verfahrens Strömungsverdichter und Verdrängerverdichter, insbesondere Schraubenverdichter, strömungsmäßig hintereinander schaltet, durch Rohrleitungen verbindet und über ein Verzweigungsgetriebe mit mindestens zwei Abtriebswellen jede Verdichterstufe mit der für sie optimalen Drehzahl betrieben werden. Die Anzahl der Verdichterstufen soll maximal 4 betragen, wobei die erste Stufe immer ein Turboverdichter und die letzte Stufe ein Verdrängungsverdichter ist. Die dazwischenliegenden Stufen sind Turbo- oder Verdrängungsverdichter. Hieraus wird ein größer konstruktiver Aufwand bei nur eingeschränkter Regelbarkeit deutlich.

Eine kombinierte Anordnung von Turboverdichtern und Schraubenverdichtern ist in den Offenbarungen der US-PS 36 40 646 und der FR-PS 13 97 614 vorgeschlagen, aber auch diese Lösungen haben Nachteile, da hier die Turboverdichter und Schraubenverdichter auf einer Welle mit gleicher Drehzahl laufen, wodurch ein optimaler Betrieb bei guten Wirkungsgraden für den diese Offenbarung betreffenden Volumen- und Druckbereich ebenso wie bei den mehrstufigen Verdichtern gleicher Gattung nicht möglich ist.

Aus der Veröffentlichung WO 2006 061 221 A1 ist ein Verfahren zum Regeln der maximalen Drehzahl eines Verdichters bekannt, der mittels eines Motors über eine hydrodynamische Kupplung angerieben wird. Hintergrund ist hierbei, dass der Verdichter in einem Fahrzeug verwendet und von dessen Antriebsmotor mit angetrieben wird, so dass die hydrodynamische Kupplung sicherstellt, dass eine definierte maximale Drehzahl des Verdichters nicht überschritten wird. Die hydrodynamische Kupplung dient daher nur bedingt der Regelung des Verdichters, der zudem als einstufige Arbeitsmaschine konzipiert ist und lediglich in seiner Drehzahlübergrenze gehalten werden soll.

Die WO 2009 090 075 A1 betrifft schließlich ein Turbolader-Turbocompoundsystem insbesondere für ein Kraftfahrzeug mit einem Verbrennungsmotor mit einer Abgasnutzturbine, die im Abgasstrom angeordnet ist, um Abgasenergie in mechanische Energie umzuwandeln, mit einem Verdichter, der mittels der Abgasnutzturbine antreibbar ist, wobei der Verdichter in einer zweiten Triebverbindung mit der Abtriebswelle des Verbrennungsmotors steht oder in eine solche schaltbar ist und die Turbocompoundtriebverbindung wenigstens zwei parallele Leistungszweige mit unterschiedlichen Übersetzungen aufweist, um das Drehzahlverhältnis zwischen der Turboladertriebverbindung und der Verbrennungsmotorabtriebswelle zu variieren. Die Offenbarung ist dadurch gekennzeichnet, dass in beiden Leistungszweigen eine hydrodynamische Kupplung vorgesehen ist. Hierdurch soll erreicht werden, dass verschiedene Übersetzungen einstellbar sind, um durch Umschalten des Antriebsleistungsflusses von dem einen Leistungszweig auf den anderen Leistungszweig das Drehzahlverhältnis zwischen der Triebverbindung zwischen der Abgasnutzturbine und dem Verdichter und der Verbrennungsmotorabtriebswelle zu verändern.

Da es sich hierbei um eine spezifische Lösung zur Verbesserung von Turbolader-Turbocompoundsystemen in Fahrzeugen handelt, ist zwar der grundsätzliche Nutzen hydrodynamischer Kupplungen zur Anpassung des Drehzahlverhältnisses mit Wirkung auf einen anzutreibenden Verdichter bekannt, allerdings nicht zur Verbesserung eines Verdichters und dessen Regelbarkeit, sondern zur besseren Nutzung eines Abgasturboladers in einem Fahrzeug mit Verbrennungsmotor in den vorhandenen unterschiedlichen Betriebszuständen.

Die Veröffentlichung DE 10 2008 061 711 B3 betrifft ein Verfahren zur Steuerung der Leistungsübertragung in einem Antriebsstrang insbesondere eines Kraftfahrzeugs bestehend aus einem Verbrennungsmotor, eine im Abgasstrom angeordnete Abgasturbine, einen in einem dem Verbrennungsmotor zugeführten Frischluftstrom angeordneten Verdichter, der durch die Abgasturbine angetrieben wird, um den Verbrennungsmotor mit einem vorgegebenen Ladedruck aufzuladen, wobei zwischen der Abgasturbine und der Abtriebswelle eine leistungsgesteuerte hydrodynamische Kupplung angeordnet ist, die ein durch die Abgasturbine angetriebenes Primärrad und ein hydrodynamisch vom Primärrad angetriebenes Sekundärrad, das die Abtriebswelle antreibt, aufweist. Das offenbarte Verfahren zur Steuerung der Leistungsübertragung des Antriebs steuert hierbei in Abhängigkeit bestimmter Eingangsgrößen die Leistungsübertragung der hydrodynamischen Kupplung.

Schließlich ist aus der Offenlegungsschrift DE 199 32 433 A1 die Verwendung von wirkungsgradgünstigen Kreiselverdichtern zur Aufladung von Verdrängerkompressoren bekannt, was zur Senkung der spezifischen Energiekosten führen soll. Der Kreiselverdichter kann hierbei entweder vom Antriebsmotor des Kompressors über einem Vielkeilriemen, einer Kupplung und einem Übersetzungsgetriebe oder von einem separaten Motor angetrieben werden.

Die im nachfolgenden beschriebene Anlage dient zur Erzeugung von Druckluft oder einem anderen zur Verdichtung geeigneten Gas. Hierbei ist es die Aufgabe der vorliegenden Erfindung, insbesondere die Arbeitsweisen und die unterschiedlichen Charakteristiken von verschiedenen Verdichtertypen so miteinander zu kombinieren, dass ein optimales Konzept einer solchen neuartigen Verdichtungsanlage entsteht. Die angestrebten verbesserten Eigenschaften beziehen sich hierbei auf einen höchstmöglichen Wirkungsgrad bei geringen Herstellkosten, eine gute Regelbarkeit und ein hohes Maß an Flexibilität.

Die gewünschten Verbesserungen sollen dadurch erreicht werden, dass bei einer Verdichteranlage mit einem oder mehreren Hauptverdichtern ein oder mehrere Vorverdichter vorgeschalteten werden. Durch diese Vorverdichtung wird die gesamte Verdichterleistung auf mindestens zwei Verdichter aufgeteilt. Durch eine geeignete Zwischenkühlung wird der Wirkungsgrad einer solchen Anlage signifikant verbessert. Des Weiteren lässt sich mit einer solchen Anlage eine Betriebsdruckregelung darstellen, welche es dem Betreiber erlaubt unterschiedliche Betriebsdrücke einzustellen ohne Umbauten an der Anlage vorzunehmen.

Um nun erfindungsgemäß eine veränderliche Drehzahl des Vorverdichters zu erreichen, ist ein weiteres Element notwendig. Als Verbindungsglied zwischen dem Antrieb des Vorverdichters und dem Antriebsmotor bzw. dem Hauptverdichter dient erfindungsgemäß eine hydrodynamische Strömungskupplung. Diese Strömungskupplung erlaubt es, die Drehzahl des Vorverdichters unabhängig von der Drehzahl des Antriebsmotors bzw. Hauptverdichters zu verändern. Diese Veränderung sorgt für eine Steigerung oder eine Verringerung des Volumenstromes bzw. des Vordruckes. Die Verwendung eines Vorverdichters in Verbindung mit einer hydrodynamischen Strömungskupplung ergibt die optimale Kombination der Arbeitscharakteristiken, da beide vom Wesen her Strömungsmaschinen sind. Die Anpassung von Drehmoment und Drehzahl ist bei dieser Kombination optimal und lässt den höchsten Gesamtwirkungsgrad zu.

Der gewünschte Volumenstrom lässt sich so stufenlos über die Menge der in der Strömungskupplung umlaufenden Flüssigkeit regulieren. Die Drehzahl des Sekundärteiles der Kupplung bestimmt hierbei die Drehzahl des Vorverdichters und damit den Volumenstrom und den Vordruck. Die Drehzahl des Sekundärteiles der Strömungskupplung liegt maximal bei der Antriebsdrehzahl des Primärteiles der Strömungskupplung abzüglich einer notwendigen Drehzahldifferenz zur Leistungsübertragung und lässt sich durch eine Verringerung der Füllmenge in der Strömungskupplung nach unten regulieren.

Dieser notwendige Schlupf stellt gleichzeitig auch den Wirkungsgradverlust dar. Um diesen in Grenzen zu halten, kann es von Bedeutung sein, die Drehzahl des Vorverdichters durch eine oder mehrere Getriebeübersetzungen zu verändern. Mit diesen festen Stufen lässt sich eine zu große Drehzahldifferenz der Turbokupplung zwischen Primär- und Sekundärdrehzahl verhindern, wodurch der Wirkungsgrad auch im Teillastbereich deutlich verbessert wird. Grundsätzlich kann es für alle Bauformen der vorliegenden erfinderischen Verdichteranlage zweckmäßig sein, dass die eingesetzten Getriebe schaltbar ausgebildet sind.

Für eine erfindungsgemäße Anlage eignen sich insbesondere solche Hauptverdichter, welche in der Lage sind, einen vom Vordruck unabhängigen Enddruck zu erzielen. Dies sind insbesondere alle Verdichter die nach dem Verdrängerprinzip arbeiten, wie z.B. Schraubenverdichter, Kolbenverdichter, Scrollverdichter, oder auch Drehzahnverdichter.

Der derzeit am häufigsten eingesetzte Verdichtertyp ist der Schraubenverdichter. Er wird mit oder ohne Flüssigkeitseinspritzung eingesetzt. Um bei diesem Verdichtertyp einen optimalen Wirkungsgrad zu erzielen ist anzustreben, das Volumenverhältnis bzw. Druckverhältnis variabel zu gestalten und damit ein vom tatsächlichen Vordruck und dem tatsächlichen Enddrucks abhängendes optimales Verdichtungsverhältnis einzustellen. Diese Art der Einstellung eines optimalen Volumenverhältnisses bzw. Druckverhältnisses wird bereits heute bei Verdichtern in der Kältemittelindustrie eingesetzt. Durch einen Schieber oder ein sonstiges geeignetes Verstellinstrument lässt sich während des Betriebes ein optimales Verhältnis einstellen.

Eine derartige Einstellbarkeit des Verhältnisses ist bei einer Bauform der vorliegenden Erfindung mit einem Schraubenverdichter als zweckmäßige Ausgestaltung vorgesehen. In Abhängigkeit des tatsächlichen Enddruckes und des tatsächlichen Vordruckes kann ein optimales inneres Volumenverhältnis des Schraubenverdichters eingestellt werden, bei dem beispielsweise ein Regelschieber und/oder geeignete Ventile derart beeinflusst werden, dass eine veränderliche Verbindung zwischen dem Verdichtungsraum des Schraubenverdichters und dem Auslassbereich hergestellt werden kann und in ihrer Wirkung damit eine Veränderung des inneren Volumenverhältnis erreichbar ist.

Bei der Einstellung des optimalen Verdichtungsverhältnisses bietet es sich an, das Verhältnis des tatsächlichen Austrittsdruckes aus dem Schraubenverdichter zum Eintrittsdruck in den Schraubenverdichter zu nutzen. Dies gilt sinngemäß auch dann, wenn der Hauptverdichter aus zwei oder mehr Schraubenverdichtern besteht. Auch hier kann das optimale Verdichtungsverhältnis derart eingestellt werden, dass es im Verhältnis des tatsächlichen Austrittsdruckes zum tatsächlichen Eintrittsdrucks des jeweiligen Schraubenverdichters gewählt wird. Auch bei den anderen geeigneten Verdichtertypen kann es sinnvoll sein, entsprechende Anpassungsmaßnahmen zur Optimierung des Wirkungsgrades durchzuführen.

Zur Vorverdichtung eignen sich grundsätzlich alle Arten von Verdichtern, jedoch ist der Turboverdichter besonders gut zur Vorverdichtung geeignet. Durch ihre Bauart bedingt sind sie in der Lage, große Volumenströme anzusaugen und auf einen entsprechenden Enddruck zu bringen, welcher jedoch sehr stark von der Drehzahl abhängt. Die Charakteristik des Turboverdichters erlaubt es daher, durch eine Veränderung der Drehzahl deutlich Veränderungen des Vordruckes und des Volumenstromes zu erzeugen.

Für die hier beschriebenen Anforderungen der neuartigen Verdichteranlage eignen sich besonders gut Turboverdichter mit radialer Durchströmung. Diese radialen Turboverdichter erlauben es, einstufig Druckverhältnisse von bis zu vier darzustellen. Es ergibt sich somit eine äußerst kompakte Baugröße und eine für die Anforderungen bestens geeignete Vorverdichterbauart.

Der Antrieb des Vorverdichters kann über ein entsprechendes Getriebe direkt durch den Antriebsmotor stattfinden oder auch als Teil des Hauptverdichters mit der entsprechenden Leistungsverzweigung. Letzteres führt zu einer besonders kompakten und effizienten Einheit, welche sowohl von einem Verbrennungsmotor als auch einem Elektromotor angetrieben werden kann.

Für größere Volumenströme ist es auch möglich, mehrere Turboverdichter parallel oder in Reihe zu schalten, insbesondere wenn extrem hohe Vordrücke gefordert sind. Eine Zwischenkühlung sorgt auch hier für einen verbesserten Wirkungsgrad.

Zusätzlich kann durch einen geeigneten Eintrittsleitapparat eine Ausweitung des Regelbereiches des Turboverdichters erreicht werden. Aber auch andere Regelungsorgane kommen in Betracht, um das Kennfeld des Turboverdichters zu erweitern. Diese Regelungsorgane können sowohl vor als auch hinter dem Turboverdichter angebracht sein. Es können weitere Regelungsorgane für den Hauptverdichter sowohl vor dem Vorverdichter als nach dem Vorverdichter d.h. gleichzeitig auch vor dem Hauptverdichter oder aber nach dem Hauptverdichter angebracht werden. Die Anordnung richtet sich nach den Bedürfnissen des Verdichterkonzepts bestehend aus Vorverdichter und Hauptverdichter.

Bei der Verwendung von mehreren Vorverdichtern besteht die Möglichkeit, diese gemeinsam über eine Strömungskupplung anzutreiben oder aber für jeden Vorverdichter eine eigene Strömungskupplung zu verwenden. Auch eine Kombination erscheint möglich, dass z.B. bei drei oder mehr Vorverdichtern zwei Vorverdichter durch eine Strömungskupplung angetrieben werden. Entscheidend ist hierbei lediglich, dass es sich um eine technisch und kommerziell sinnvolle Kombination für den jeweiligen Anwendungsfall handelt.

Bei einer Bauform mit flüssigkeitseingespritztem Verdichter kann die Kühl- und Schmierflüssigkeit des Verdichters auch zum Betrieb der Strömungskupplung genutzt werden und erlaubt so einen gemeinsamen Kreislauf mit einem optimalen Verhältnis zwischen Kosten und Nutzen. Die für die Strömungskupplung benötigte Flüssigkeit wird hierbei aus dem Hauptstrom der zurückgekühlten Kühl- und Schmierflüssigkeit entnommen. Wenn der Vorverdichter im Hauptverdichter baulich integriert ist, kann die Flüssigkeit zum Betrieb der Strömungskupplung im Hauptverdichter entnommen werden und auch wieder dort in den Kreislauf zurückgeführt werden, sofern die notwendigen Druckunterschiede beachtet werden.

Auch bei einer nicht in den Hauptverdichter integrierten Bauweise des Vorverdichters kann die Betriebsflüssigkeit der Strömungskupplung aus dem Hauptstrom der Kühl- und Schmierflüssigkeit entnommen werden und auch wieder in diesen Kreislauf zurückgeführt werden unter Beachtung der notwendigen Druckunterschiede. Sollten diese Druckunterschiede nicht vorhanden sein, so kann mit Hilfe einer Flüssigkeitspumpe für den notwendigen Druckunterschied gesorgt werden. Dies gilt sowohl für die Variante das der Vorverdichter im Hauptverdichter integriert ist, als auch für die Variante das der Vorverdichter nicht im Hauptverdichter integriert ist.

Bei Verdichtern ohne Flüssigkeitseinspritzung gibt es die Möglichkeit, einen entsprechenden Kreislauf mit einer Flüssigkeit zum Betrieb der Strömungskupplung zu integrieren oder aber einen oftmals enthalten Ölkreislauf zur Lagerschmierung und Gehäusekühlung mit zu nutzen. Bei einer entsprechend ausreichend großen Ölmenge und Pumpengröße lässt sich auch hier eine kompakte Baueinheit darstellen ohne einen großen zusätzlichen Aufwand. Auch hier ist es möglich dies integriert im Verdichtergehäuse des Hauptverdichters einzubauen oder aber den Vorverdichter in einem separaten Gehäuse unterzubringen und die Flüssigkeit aus dem Ölkreislauf zur Lagerschmierung und Gehäusekühlung des Hauptverdichters zu entnehmen und auch in diesen zurückzuführen. Sollte die Ölmenge und/oder die Pumpe nicht ausreichen, sind diese entsprechend den Anforderungen der Strömungskupplung neu zu bemessen.

Eine weitere Möglichkeit besteht darin, die Strömungskupplung in einem eigenständigen Ölkreislauf zu betreiben. Dies wäre insbesondere dann sinnvoll, wenn die Strömungskupplung inklusive dem Getriebe und dem Vorverdichter in einem eigenen Gehäuse verbaut wäre. Eine solche Lösung erfordert jedoch einen erheblich höheren konstruktiven Aufwand, da sowohl eine separate Ölpumpe als auch ein geeigneter Ölkühler notwendig wären. Ob dieser zusätzlich Aufwand wirtschaftlich gerechtfertigt ist, muss im Einzelfall geprüft werden. Bei einer Anordnung dieser baulichen Komponenten in einem eigenen Gehäuse kann zudem als Alternative sinnvoll sein, dass die hydrodynamische Strömungskupplung über einen eigenen Antrieb verfügt und somit diesbezüglich nicht mit dem Hauptverdichter gekoppelt ist.

Hierzu ist auch grundsätzlich anzumerken, dass die Frage eines eigenen Antriebes für die Strömungskupplung grundsätzlich relevant ist und in Abhängigkeit von den Betriebsparametern der Verdichteranlage zu beantworten ist. Ist grundsätzlich eine kompakte Bauform von Vorverdichter und Hauptverdichter mit allen baulichen Komponenten und Antrieb in einem Gehäuse anzustreben, so kann es dennoch im speziellen Anwendungsfall sowohl technisch als auch wirtschaftlich sinnvoll sein, die Komponenten baulich zu trennen und separat anzutreiben.

Zur Regelung des Füllstandes der Strömungskupplung bietet es sich an, den gewünschten Enddruck des Verdichters mit dem tatsächlichen Betriebsdruck zu vergleichen. Ist der tatsächliche Betriebsdruck geringer als der gewünschte Betriebsdruck kann die Füllung der Strömungskupplung erhöht werden bis zum Erreichen der maximalen Drehzahl. Wird der angestrebte Betriebsdruck überschritten, wird in analoger Weise die Betriebsflüssigkeit in der Strömungskupplung reduziert, bis der gewünschte Betriebsdruck erreicht wird.

Hierbei ist vorgesehen, mit geeigneten Ventilen entweder den Zufluss der Betriebsflüssigkeit oder aber den Abfluss der Betriebsflüssigkeit zu beeinflussen. Auch eine Kombination von Ventilen im Bereich des Zuflusses als auch Abflusses der Betriebsflüssigkeit ist eine bauliche Alternative. Durch den permanenten Zufluss und Abfluss von Betriebsflüssigkeit wird gleichzeitig für eine entsprechende Kühlung gesorgt, da die Verlustwärme der Strömungskupplung abgeführt werden muss. Eine weitere Alternative zur Überwachung und Regelung der Strömungskupplung ist eine Drehzahlüberwachung. Auch eine Überwachung des erzielten Vordruckes kann als Indikation des Betriebszustandes der Strömungskupplung herangezogen werden.

Mit den oben dargestellten Ausführungen lassen sich nun folgende Vorteile erzielen:

### 1. Volumenstromanpassungen

Der Hauptverdichter wird von einem Antriebsmotor auf einer konstanten Drehzahl gehalten und saugt daher einen konstanten Volumenstrom des zu verdichtenden Gases an. Wird über den Vorverdichter nun ein Vordruck aufgebaut, erhöht sich der Volumenstrom der gesamten Verdichteranlage. Bei einem Vordruck von 1 bar(ü) hat sich bei gleicher Temperatur der Volumenstrom verdoppelt, bei 2 bar(ü) verdreifacht und bei 3 bar(ü) sogar vervierfacht.

### 2. Geringere Herstellkosten

Um einen Verdichteranlage mit einem gewünschten Volumenstrom zu realisieren, ist der Hauptverdichter bei einem Vordruck von 1 bar(ü) und bei gleicher Temperatur nur noch halb so groß zu dimensionieren wie bei einer Verdichteranlage ohne Vorverdichtung. Bei einem Vordruck von 2 bar(ü) reduziert sich die Baugröße sogar in etwa auf ein Drittel und analog bei 3 bar(ü) auf etwa ein Viertel der üblichen Baugröße.

Bei Verdichteranlagen mit Antrieb durch Elektromotor kann zusätzlich auf den Einsatz eines Frequenzumrichters verzichtet werden, so daß auch ein deutlich kostengünstigerer Standartelektromotor eingesetzt werden kann. Der zusätzliche Kostenaufwand für den Vorverdichter, die Strömungskupplung und den zusätzlichen Zwischenkühler ist erheblich geringer als die erreichbaren Kosteneinsparungen, wodurch die erfindungsgemäße Lösung betriebswirtschaftlich sinnvoll ist.

### 3. Verbesserung des Wirkungsgrades

Durch ein optimal gewähltes Verdichtungsverhältnis zwischen Vorverdichter und Hauptverdichter lässt sich der Gesamtwirkungsgrad bei guter Zwischenkühlung um mehr als 15% verbessern. Dies führt zu erheblichen Verringerungen des Energieverbrauches und somit zu signifikanten Kostenersparnissen beim Betrieb der Verdichteranlage.

### 4. Flexiblerer Einsatz der Verdichteranlage

Wird vom Betreiber der Anlage ein höherer Betriebsdruck gewünscht kann dieser durch eine Absenkung des Vordruckes und damit einer Reduzierung des Volumenstromes dargestellt werden. Der Hauptverdichter braucht für den höheren Druck ein höheres Drehmoment und der Vorverdichter kann durch einen geringeren Vordruck sein Drehmomentbedarf reduzieren bis sich wieder ein Gleichgewicht zwischen verfügbarem Drehmoment des Antriebsmotors auf der einen Seite und benötigtem Drehmoment des Vorverdichter und Hauptverdichter auf der anderen Seite eingestellt hat.

Auch eine Anpassung an die Umgebungsbedingungen bezüglich Meereshöhe und Umgebungstemperatur ist so möglich. Auch die Auslastung des Antriebsmotors kann mit berücksichtigt werden durch eine geeignete Überwachung. Dies ist z.B. bei Elektromotoren durch eine Überwachung der Wicklungstemperatur möglich. Somit wird eine Überlastung des Motors verhindert, gleichzeitig kann die Verdichteranlage immer soweit genutzt werden, bis die Einsatzgrenzwerte erreicht sind. Dies gilt sinngemäß auch für eine Kombination mit Verbrennungsmotoren als Antrieb. Die Anlage ist somit in der Lage, auf unterschiedliche Einsatzbedingungen flexibel zu reagieren, wodurch ein deutlich erweitertes Einsatzspektrum der erfindungsgemäßen Verdichteranlage ohne bauliche Anpassungen möglich ist.

### 5. Ausweitung des Einsatzbereiches der Verdichteranlage

Bei Verdichteranlagen welche durch einen Elektromotor angetrieben werden, ist es erfindungsgemäß möglich, durch eine Überwachung verschiedener Parameter, z.B. der Stromaufnahme und der Stromspannung oder aber durch eine Überwachung der Wicklungstemperatur, die Auslastung des Motors optimal anzupassen.

Auch andere Parameter zur Überwachung des Elektromotors sind möglich. Extreme Umgebungsbedingung wie niedriger Luftdruck durch Höhenaufstellung oder extrem hohe Umgebungstemperaturen können durch eine Variation des Vordruckes und damit einer Veränderung der Leistungsaufnahme von Vorverdichter und Hauptverdichter kompensiert werden. Eine Überlastung des Motors kann so verhindert werden und gleichzeitig kann eine Auslastung des Motors bis an seine Einsatzgrenzen möglich gemacht werden ohne den Motor zu schädigen oder seine Lebensdauer zu verkürzen.

Sinngemäß gilt dies auch bei einem Einsatz eines Verbrennungsmotors. Hierbei werden dann andere Parameter wie z.B. die Abgastemperatur, das tatsächliche Drehmoment als Funktion der Kraftstoffeinspritzmenge oder aber die Kühlwassertemperatur überwacht und als Beurteilung der Auslastung herangezogen.

Bei Schraubenverdichtern ohne Flüssigkeitseinspritzung ist die erfindungsgemäße Verdichteranlage ebenfalls vorteilhaft. Es besteht hier das Problem, dass durch die zweistufige Ausführung der maximale Enddruck begrenzt ist. Dieser liegt im Bereich von 10 bis 11 bar(ü) (in Sonderfällen auch bis 13 bar(ü)) und ist bedingt durch die maximal zulässige Austrittstemperatur nach der zweiten Stufe. Grundsätzlich gilt, je höher der Betriebsdruck desto höher ist die Austrittstemperatur.

Wird nun durch die erfindungsgemäße Vorverdichtung der Vordruck vor der ersten Stufe auf einem Niveau von größer 0,5 bar(ü) gehalten, kann der Verdichtungsenddruck nach der zweiten Stufe auf 15 bar(ü) oder höher angehoben werden ohne die kritischen Austrittstemperaturen zu überschreiten. Des Weiteren kann auch der Regelbereich des Ansaugvolumenstromes deutlich erweitert werden.

Bei höheren Betriebsdrücken besteht bei herkömmlichen drehzahlgeregelten Antrieben das Problem, dass bei niedrigen Drehzahlen so viel komprimiertes Gas zurückströmt, dass es bereits dadurch zu einer zu hohen Austrittstemperatur kommen kann. Das zweite Problem liegt im Drehmomentbedarf. Dieser steigt bekanntlich mit dem Betriebsdruck an und kann durch die Rückströmung des komprimierten Gases bei niederen Drehzahlen bereits die Grenzwerte für das maximal zulässige Drehmoment überschreiten. Die Verdichteranlage muss daher bei einer Mindestdrehzahl gehalten werden, die auch mit der unzureichenden Kühlung des Elektromotors bei niedrigen Drehzahlen zusammenhängt.

Der Regelbereich des Volumenstromes ist daher in konventionellen Anlagen sehr eingeschränkt und kann bei 10 bar(ü) als maximalem Betriebsdruck bereits dazu führen, dass die Motordrehzahl nur um etwa 40% abgesenkt werden kann. Der Volumenstromregelbereich liegt somit nur bei bis zu 40%. Eine in ihrer Leistung vergleichbare erfindungsgemäße Verdichteranlage kann bei gleichem Betriebsdruck, beispielsweise 10 bar(ü), einen Volumenstromregelbereich realisieren bis zu 70% bis 80%.

Auch bei Verdichteranlagen mit Flüssigkeitseinspritzung lässt sich der Betriebsdruck deutlich erhöhen bei einem weiterhin guten Wirkungsgrad und einem weiterhin hohen Volumenstromregelbereich wenn man den Vordruck auf einem Mindestniveau hält. Der Vordruck sorgt dafür, dass ein höherer Betriebsdruck immer noch mit einem technisch optimalen Verdichtungsverhältnis des Hauptverdichters dargestellt werden kann. Der Standard von Atmosphäre auf 10 bar(ü) bedeutet ein Verdichtungsverhältnis von 11, wobei ein Vordruck von 0,5 bar(ü) bei einer Verdichtung auf 15,5 bar(ü) auch ein Verdichtungsverhältnis des Hauptverdichters von 11 bedeutet .

Im Folgenden soll anhand zweier schematischer Zeichnungen das Grundkonzept dieser Verdichteranlage näher erläutert werden. Es zeigen
- Figur 1: den schematischen Aufbau einer möglichen Verdichteranlage mit einem Vorverdichter und einem Hauptverdichter ohne Flüssigkeitseinspritzung und
- Figur 2: den schematischen Aufbau einer möglichen Verdichteranlage mit einem Vorverdichter und einem Hauptverdichter mit Flüssigkeitseinspritzung und Nutzung der Flüssigkeit zum Betrieb der Strömungskupplung.

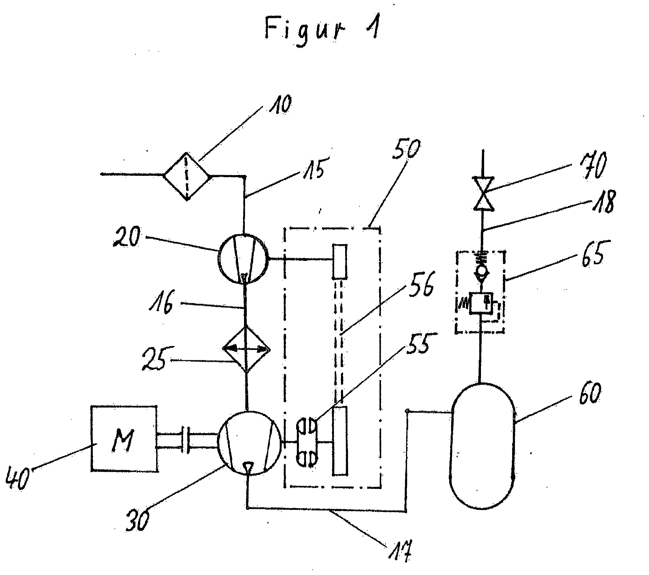

In der Verdichteranlage nach Figur 1 wird über einen Luftfilter 10 die Ansaugluft gereinigt und dann über eine Verbindungsleitung 15 dem Vorverdichter 20 zugeführt. Über eine weitere Verbindungsleitung 16 wird die vorkomprimierte Ansaugluft einem Zwischenkühler 25 zugeführt und bestmöglich gekühlt. Die gekühlte und vorkomprimierte Luft wird dann dem Hauptverdichter 30 zugeführt.

Bei diesem Hauptverdichter kann es sich grundsätzlich um jede Art von Verdichter handeln, auch mehrstufige Verdichter sind möglich, mit oder ohne Zwischenkühlung zwischen den einzelnen Verdichterstufen des Hauptverdichters. Angetrieben wird der Hauptverdichter 30 durch einen Antriebsmotor 40. Bei diesem Antriebsmotor 40 kann es sich auch um jegliche zum Antrieb eines Verdichters mögliche Bauform handeln. Dies können zum Beispiel Elektromotoren, Verbrennungsmotoren oder auch Turbinen jeglicher Art sein.

Im Hauptverdichter 30 wird die Druckluft auf den gewünschten Betriebsdruck verdichtet und über eine Verbindungsleitung 17 einem Druckbehälter 60 zugeführt. Zum Aufrechterhalten eines minimalen Betriebsdruckes ist am Austritt des Druckbehälters 60 ein Mindestdruckventil 65 montiert. Von diesem Mindestdruckventil 65 strömt die komprimierte Luft über eine Entnahmeleitung 18 zur Entnahmestelle 70.

Die über den Hauptverdichter 30 angetriebene Strömungskupplung 55 inklusive Getriebeübersetzung 50, bestehend aus der Strömungskupplung 55 und dem Getriebe 56, dient zum Antrieb des Vorverdichters 20. Es handelt sich hierbei um eine exemplarische Darstellung mit einem Vorverdichter 20 und einer diesem zugeordneten Strömungskupplung 55.

Es ist für das Verständnis der Erfindung aber wesentlich, dass es sich hierbei um Komponenten handelt, die je nach Verdichteranlage mehrfach und in der erforderlichen Ausgestaltung verwendet werden sollen. So wurde bereits ausgeführt, dass mehrere Vorverdichter 20 mit mehreren Strömungskupplungen 55 zusammenwirken können und diese auch einen Vordruck für einen unterschiedlich gestalteten Hauptverdichter 30 liefern können. Daher ist auch das hier dargestellte Getriebe 56 nur beispielhaft. Es können auch mehrere Getriebe erforderlich sein, wie auch ein separater Antrieb des Vorverdichters und ein separater Flüssigkeitskreislauf. All diese weiteren Kombinationsoptionen sind nicht eigens zeichnerisch dargestellt, sollen aber ebenfalls in der technischen Lehre mit umfasst sein.

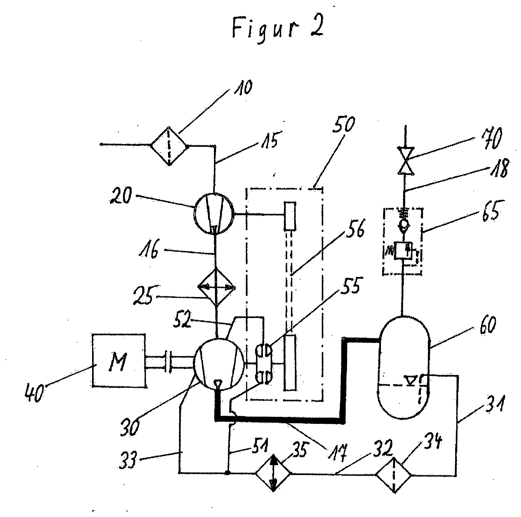

In der Verdichteranlage nach Figur 2 wird über einen Luftfilter 10 die Ansaugluft gereinigt und dann über eine Verbindungsleitung 15 dem Vorverdichter 20 zugeführt. Über eine weitere Verbindungsleitung 16 wird die vorkomprimierte Ansaugluft einem Zwischenkühler 25 zugeführt und bestmöglich gekühlt.

Die gekühlte und vorkomprimierte Luft wird dann dem Hauptverdichter 30 zugeführt. Bei diesem Hauptverdichter handelt es sich in dieser Bauform um einen Verdichter mit Flüssigkeitseinspritzung. Angetrieben wird der Hauptverdichter 30 durch einen Antriebsmotor 40. Bei diesem Antriebsmotor 40 kann es sich auch um jegliche zum Antrieb eines Verdichters mögliche Bauform handeln. Dies können wie zuvor ausgeführt zum Beispiel Elektromotoren, Verbrennungsmotoren oder auch Turbinen jeglicher Art sein.

Im Hauptverdichter 30 wird die Druckluft wieder auf den gewünschten Betriebsdruck verdichtet und über eine Verbindungsleitung 17 einem Druckbehälter 60 zugeführt. Zum aufrechterhalten eines minimalen Betriebsdruckes ist am Austritt des Druckbehälters 60 ein Mindestdruckventil 65 montiert. Von diesem Mindestdruckventil 65 strömt die komprimierte Luft über eine Entnahmeleitung 18 zu der Entnahmestelle 70.

Die im Druckbehälter 60 von der Druckluft abgeschiedene Flüssigkeit wird über eine Leitung 31, einem Filter 34, einer Leitung 32, einem Flüssigkeitskühler 35 sowie einer Leitung 33 dem Hauptverdichter 30 wieder zugeführt. Die über den Hauptverdichter 30 angetriebene Strömungskupplung inklusive Getriebeübersetzung 50 dient zum Antrieb des Vorverdichters 20. Als Betriebsflüssigkeit für die Strömungskupplung 55 dient ein Teilstrom der Kühl- und Schmierflüssigkeit des Hauptverdichters 30. Entnommen wird dieser Teilstrom über eine Leitung 51 und dann der Strömungskupplung 55 zugeführt.

Die aus der Strömungskupplung 55 wieder austretende Betriebsflüssigkeit wird über die Leitung 52 dem Hauptverdichter 30 wieder zugeführt.

## Patentansprüche

1. Verdichteranlage zur Erzeugung eines komprimierten Gases, insbesondere von Luft, mit zumindest einem Hauptverdichter (30), welchem mit Hilfe zumindest eines Vorverdichters (20) vorverdichtetes Gas zugeführt wird, wobei
- der zumindest eine Hauptverdichter (30) wie auch der zumindest eine Vorverdichter (20) von einem gemeinsamen Antriebsmotor (40) oder getrennten Antrieben angetrieben werden,
**dadurch gekennzeichnet, dass**
- zumindest einem Vorverdichter (20) eine hydrodynamische Strömungskupplung (55) zur Veränderung der Antriebsdrehzahl des Vorverdichters (20) zugeordnet ist,
- wobei diese Strömungskupplung (55) es ermöglicht, die Antriebsdrehzahl des Vorverdichters (20) unabhängig von der Drehzahl des gemeinsamen Antriebsmotors (40) oder des getrennten Antriebes des Vorverdichters (20) zu verändern.

2. Verdichteranlage nach Anspruch 1,
**dadurch gekennzeichnet, dass**
sowohl die Antriebsdrehzahl der Strömungskupplung (55) als auch die Antriebsdrehzahl des Vorverdichters (20) über zumindest ein geeignetes Getriebe (56) angepasst werden.

3. Verdichteranlage nach Anspruch 1 oder 2,
**dadurch gekennzeichnet, dass**
der Vorverdichter (20) aus mindestens einem Turboverdichter besteht, der in radialer Bauform ausgeführt ist.

4. Verdichteranlage nach einem der vorangegangenen Ansprüche,
**dadurch gekennzeichnet, dass**
als Vorverdichter (20) zumindest zwei Turboverdichter zur Erhöhung des Volumenstromes parallel ansaugend angeordnet sind, die über eine oder mehrere Strömungskupplungen (55) angetrieben werden.

5. Verdichteranlage nach einem der Ansprüche 1 bis 3,
**dadurch gekennzeichnet,**
**dass** als Vorverdichter (20) zumindest zwei Turboverdichter zur Erhöhung des Vordruckes hintereinander ansaugend angeordnet sind, die über eine oder mehrere Strömungskupplungen (55) angetrieben werden.

6. Verdichteranlage nach Anspruch 5,
**dadurch gekennzeichnet, dass**
zumindest ein Zwischenkühler zwischen den zumindest zwei Turboverdichtern zur Verbesserung des Wirkungsgrades angeordnet ist.

7. Verdichteranlage nach einem der vorangegangenen Ansprüche,
**dadurch gekennzeichnet, dass**
zur Regelung der Strömungskupplung (55) im Zulauf und/oder im Ablauf der Betriebsflüssigkeit der Strömungskupplung (55) Regelorgane zur stufenlosen Anpassung der Drehzahl der Strömungskupplung (55) vorgesehen sind.

8. Verdichteranlage nach einem der vorangegangenen Ansprüche,
**dadurch gekennzeichnet, dass**
der mechanische Antrieb des Vorverdichters (20) inklusive der Strömungskupplung (55) im Gehäuse des Hauptverdichters (30) integriert ist.

9. Verdichteranlage nach einem der vorangegangenen Ansprüche,
**dadurch gekennzeichnet, dass**
zwischen dem Vorverdichter (20) und dem Hauptverdichter (30) zur Verbesserung des Wirkungsgrades ein Zwischenkühler (25) angeordnet ist.

10. Verdichteranlage nach einem der vorangegangenen Ansprüche,
**dadurch gekennzeichnet, dass**
- der zumindest eine Hauptverdichter (30) ein flüssigkeitseingespritzter Verdichter ist,
- wobei diese Flüssigkeit des Hauptverdichters (30) auch als Arbeitsmedium der Strömungskupplung (55) des Vorverdichters (20) zugeführt wird.

11. Verdichteranlage nach einem der vorangegangenen Ansprüche,
**dadurch gekennzeichnet, dass**
der Antrieb der Strömungskupplung (55) direkt oder über ein Getriebe vom Hauptverdichter (30) oder vom Antriebsmotor (40) aus erfolgt.

12. Verdichteranlage nach einem der vorangegangenen Ansprüche,
**dadurch gekennzeichnet, dass**
die Verdichteranlage einen oder mehrere Schraubenverdichter mit oder ohne Flüssigkeitseinspritzung und mindestens einen radialen Turboverdichter zur Vorverdichtung des Gases umfasst.

13. Verdichteranlage nach einem der vorangegangenen Ansprüche,
**dadurch gekennzeichnet, dass**
die Flüssigkeit des Schmier- und/oder Kühlkreislaufs für die Lager, das Antriebsgetriebe und/oder die Gehäusekühlung des Hauptverdichters (30) zumindest teilweise auch das Arbeitsmedium der Strömungskupplung (55) des Vorverdichters (20) ist.

14. Verdichteranlage nach einem der vorangegangenen Ansprüche,
**dadurch gekennzeichnet, dass**
der Vorverdichter (20), die Strömungskupplung (55) und alle zum Erreichen der gewünschten Drehzahl angeordneten Getriebeübersetzungen (56) in einem Schraubenverdichter integriert sind.

15. Verdichteranlage nach Anspruch 2 oder 11,
**dadurch gekennzeichnet, dass**
die Getriebeübersetzungen zur Drehzahlregulierung schaltbar ausgebildet sind.

16. Verdichteranlage nach Anspruch 12 oder 14,
**dadurch gekennzeichnet, dass**
in Abhängigkeit des tatsächlichen Enddruckes und des tatsächlichen Vordruckes ein optimales inneres Volumenverhältnis des Schraubenverdichters durch mechanische Verstelleinrichtungen und/oder Ventile eingestellt werden kann.

17. Verfahren zur Regelung einer Verdichteranlage nach einem der vorangegangenen Ansprüche,
**dadurch gekennzeichnet, dass**
bei einem Antrieb (40) der Verdichteranlage durch einen Elektromotor dessen Wicklungstemperatur und/oder die Stromaufnahme und/oder die Stromspannung als Parameter der Auslastung des Elektromotors erfasst und als Regelgröße genutzt wird, um durch Änderungen der Betriebsparameter der Strömungskupplung (55) zur Veränderung der Antriebsdrehzahl des Vorverdichters (20) den durch den Vorverdichter (20) erzeugten Vordruck derart zu regeln, dass der Elektromotor stärker belastet oder entlastet wird.

18. Verfahren zur Regelung einer Verdichteranlage nach einem der vorangegangenen Ansprüche 1 bis 16,
**dadurch gekennzeichnet, dass**
bei einem Antrieb (40) der Verdichteranlage durch eine Brennkraftmaschine deren Abgastemperatur und/oder Kühlwassertemperatur und/oder tatsächliches Drehmoment als Funktion der Kraftstoffeinspritzmenge und der Drehzahl als Parameter der Auslastung der Brennkraftmaschine erfasst und als Regelgröße genutzt wird, um durch Änderungen der Betriebsparameter der Strömungskupplung (55) zur Veränderung der Antriebsdrehzahl des Vorverdichters (20) den durch den Vorverdichter (20) erzeugten Vordruck derart zu regeln, dass die Brennkraftmaschine stärker belastet oder entlastet wird.

## Claims

1. Compressor system for generating a compressed gas, in particular air, having at least one main compressor (30) to which pre-compressed gas is fed using at least one pre-compressor (20),
wherein
- the at least one main compressor (30) is driven, as is also the at least one pre-compressor (20), by a common drive motor (40) or separate drives,
**characterized in that**
- at least one pre-compressor (20) is assigned a hydrodynamic fluid coupling (55) for changing the drive speed of the pre-compressor (20),
- wherein this fluid coupling (55) makes it possible to change the drive speed of the pre-compressor (20) independently of the rotational speed of the common drive motor (40) or of the separate drive of the pre-compressor (20).

2. Compressor system according to Claim 1,
**characterized in that**
both the drive speed of the fluid coupling (55) and the drive speed of the pre-compressor (20) are adapted by means of at least one suitable transmission (56).

3. Compressor system according to Claim 1 or 2,
**characterized in that**
the pre-compressor (20) is composed of at least one turbo compressor which is embodied. with a radial design.

4. Compressor system according to one of the preceding claims,
**characterized in that**
at least two turbo compressors are arranged as pre-compressors (20) with parallel intake in order to increase the volume flow, said turbo compressors being driven by one or more fluid couplings (55).

5. Compressor system according to one of Claims 1 to 3,
**characterized in that**
at least two turbo compressors are arranged as pre-compressors (20) with serial intake in order to increase the admission pressure, said turbo compressors being driven by one or more fluid couplings (55).

6. Compressor system according to Claim 5,
**characterized in that**
at least one intermediate cooler is arranged between the at least two turbo compressors in order to improve the efficiency.

7. Compressor system according to one of the preceding claims,
**characterized in that**
in order to regulate the fluid coupling (55), regulating elements for the infinitely variable adaptation of the rotational speed of the fluid coupling (55) are provided in the inflow and/or in the outflow of the operating fluid of the fluid coupling (55).

8. Compressor system according to one of the preceding claims,
**characterized in that**
the mechanical drive of the pre-compressor (20) is integrated together with the fluid coupling (55) into the housing of the main compressor (30).

9. Compressor system according to one of the preceding claims,
**characterized in that**
an intermediate cooler (25) is arranged between the pre-compressor (20) and the main compressor (30) in order to improve the efficiency.

10. Compressor system according to one of the preceding claims,
**characterized in that**
- the at least one main compressor (30) is a fluid-injected compressor,
- wherein this fluid of the main compressor (30) is also fed as working medium to the fluid coupling (55) of the pre-compressor (20).

11. Compressor system according to one of the preceding claims,
**characterized in that**
the drive of the fluid coupling (55) is provided directly or by way of a transmission from the main compressor (30) or from the drive motor (40).

12. Compressor system according to one of the preceding claims,
**characterized in that**
the compressor system comprises one or more screw compressors with or without fluid injection and at least one radial turbo compressor for precompressing the gas.

13. Compressor system according to one of the preceding claims,
**characterized in that**
the fluid of the lubrication circuit and/or cooling circuit for the bearings, the drive transmission and/or the housing cooling means of the main compressor (30) is at least partially also the working medium of the fluid coupling (55) of the pre-compressor (20).

14. Compressor system according to one of the preceding claims,
**characterized in that**
the pre-compressor (20), the fluid coupling (55) and all the transmission ratios (56) which are arranged for the purpose of reaching the desired rotational speed are integrated into a screw compressor.

15. Compressor system according to Claim 2 or 11,
**characterized in that**
the transmission ratios are embodied in a shiftable fashion in order to regulate the rotational speed.

16. Compressor system according to Claim 12 or 14,
**characterized in that**
an optimum internal volume ratio of the screw compressor can be set as a function of the actual final pressure and of the actual admission pressure by mechanical adjustment devices and/or valves.

17. Method for regulating a compressor system according to one of the preceding claims,
**characterized in that**
in the case of a drive (40) of the compressor system by means of an electric motor, the winding temperature thereof and/or the power drain and/or the current voltage are detected as parameters of the utilization factor of the electric motor and used as a regulated variable, in order to regulate, through changes in the operating parameters of the fluid coupling (55) for the purpose of changing the drive speed of the pre-compressor (20), the admission pressure which is generated by the pre-compressor (20) in such a way that the electric motor is loaded or relieved of loading to a greater degree.

18. Method for regulating a compressor system according to one of the preceding Claims 1 to 16,
**characterized in that**
in the case of a drive (40) of the compressor system by means of an internal combustion engine, the output gas temperature and/or coolant water temperature and/or actual torque thereof are detected as a function of the fuel injection quantity and the rotational speed as parameters of the utilization factor of the internal combustion engine and used as a regulated variable, in order to regulate, through changes in the operating parameters of the fluid coupling (55) for the purpose of changing the drive speed of the pre-compressor (20), the admission pressure generated by the pre-compressor (20) in such a way that the internal combustion engine is loaded or relieved of loading to a greater degree.

## Revendications

1. Installation de compresseur pour la génération d'un gaz comprimé, en particulier d'air, comprenant au moins un compresseur principal (30) auquel du gaz précomprimé au moyen d'au moins un précompresseur (20) est acheminé,
- l'au moins un compresseur principal (30) ainsi que l'au moins un précompresseur (20) étant entraînés par un moteur d'entraînement commun (40) ou par des entraînements séparés,
**caractérisée en ce**
- **qu'**un accouplement fluidique hydrodynamique (55) est associé à au moins un précompresseur (20), pour modifier la vitesse de rotation d'entraînement du précompresseur (20),
- cet accouplement fluidique (55) permettant de modifier la vitesse de rotation d'entraînement du précompresseur (20) indépendamment de la vitesse de rotation du moteur d'entraînement commun (40) ou de l'entraînement séparé du précompresseur (20).

2. Installation de compresseur selon la revendication 1,
**caractérisée en ce que**
la vitesse de rotation d'entraînement de l'accouplement fluidique (55) ainsi que la vitesse de rotation d'entraînement du précompresseur (20) sont adaptées par le biais d'au moins une transmission appropriée (56).

3. Installation de compresseur selon la revendication 1 ou 2,
**caractérisée en ce que**
le précompresseur (20) se compose d'au moins un turbocompresseur réalisé sous forme radiale.

4. Installation de compresseur selon l'une quelconque des revendications précédentes,
**caractérisée en ce**
**qu'**au moins deux turbocompresseurs aspirant en parallèle pour augmenter le débit volumique sont disposés en tant que précompresseur (20), lesquels sont entraînés par le biais d'un ou plusieurs accouplements fluidiques (55).

5. Installation de compresseur selon l'une quelconque des revendications 1 à 3, **caractérisée en ce qu'**au moins deux turbocompresseurs aspirant l'un derrière l'autre pour augmenter la pré-pression sont disposés en tant que précompresseur (20) lesquels sont entraînés par le biais d'un ou plusieurs accouplements fluidiques (55).

6. Installation de compresseur selon la revendication 5,
**caractérisée en ce**
**qu'**au moins un radiateur intermédiaire est disposé entre les au moins deux turbocompresseurs afin d'améliorer le rendement.

7. Installation de compresseur selon l'une quelconque des revendications précédentes,
**caractérisée en ce que**
pour la régulation de l'accouplement fluidique (55) dans l'alimentation et/ou l'évacuation du liquide de travail de l'accouplement fluidique (55), des organes de réglage sont prévus pour l'adaptation en continu de la vitesse de rotation de l'accouplement fluidique (55).

8. Installation de compresseur selon l'une quelconque des revendications précédentes,
**caractérisée en ce que**
l'entraînement mécanique du précompresseur (20) y compris de l'accouplement fluidique (55) est intégré dans le boîtier du compresseur principal (30) .

9. Installation de compresseur selon l'une quelconque des revendications précédentes,
**caractérisée en ce**
**qu'**entre le précompresseur (20) et le compresseur principal (30) est disposé un radiateur intermédiaire (25) pour améliorer le rendement.

10. Installation de compresseur selon l'une quelconque des revendications précédentes,
**caractérisée en ce que**
- l'au moins un compresseur principal (30) est un compresseur à injection de liquide,
- ce liquide du compresseur principal (30) étant également acheminé sous forme de fluide de travail à l'accouplement fluidique (55) du précompresseur (20).

11. Installation de compresseur selon l'une quelconque des revendications précédentes,
**caractérisée en ce que**
l'entraînement de l'accouplement fluidique (55) s'effectue directement ou par le biais d'une transmission depuis le compresseur principal (30) ou depuis le moteur d'entraînement (40).

12. Installation de compresseur selon l'une quelconque des revendications précédentes,
**caractérisée en ce que**
l'installation de compresseur comprend un ou plusieurs compresseurs à vis avec ou sans injection de liquide et au moins un turbocompresseur radial pour la précompression du gaz.

13. Installation de compresseur selon l'une quelconque des revendications précédentes,
**caractérisée en ce que**
le liquide du circuit de lubrification et/ou de refroidissement pour les paliers, le mécanisme d'entraînement et/ou le refroidissement du boîtier du compresseur principal (30) est au moins en partie également le fluide de travail de l'accouplement fluidique (55) du précompresseur (20) .

14. Installation de compresseur selon l'une quelconque des revendications précédentes, **caractérisée en ce que**
le précompresseur (20), l'accouplement fluidique (55) et tous les rapports de démultiplication de la transmission (56) agencés de manière à obtenir la vitesse de rotation souhaitée sont intégrés dans un compresseur à vis.

15. Installation de compresseur selon la revendication 2 ou 11,
**caractérisée en ce que**
les rapports de démultiplication de la transmission sont réalisés de manière commutable pour la régulation de la vitesse de rotation.

16. Installation de compresseur selon la revendication 12 ou 14,
**caractérisée en ce**
**qu'**en fonction de la pression finale effective et de la pré-pression effective, un rapport de volume interne optimal du compresseur à vis peut être ajusté par des dispositifs de réglage mécaniques et/ou des soupapes.

17. Procédé de réglage d'une installation de compresseur selon l'une quelconque des revendications précédentes,
**caractérisé en ce que**
dans le cas d'un entraînement (40) de l'installation de compresseur par un moteur électrique, sa température d'enroulement et/ou sa consommation de courant et/ou sa tension électrique sont détectées en tant que paramètres d'utilisation du moteur électrique et utilisées en tant que grandeur de réglage afin de régler, par des modifications des paramètres de fonctionnement de l'accouplement fluidique (55) pour modifier la vitesse de rotation d'entraînement du précompresseur (20), la prépression générée par le précompresseur (20) de telle sorte que le moteur électrique soit plus fortement chargé ou déchargé.

18. Procédé de réglage d'une installation de compresseur selon l'une quelconque des revendications 1 à 16,
**caractérisé en ce que**
dans le cas d'un entraînement (40) de l'installation de compresseur par un moteur à combustion interne, sa température de gaz d'échappement et/ou sa température d'eau de refroidissement et/ou son couple effectif sont détectés en fonction de la quantité d'injection de carburant et de la vitesse de rotation en tant que paramètres de l'utilisation du moteur à combustion interne et sont utilisés en tant que grandeur de réglage afin de régler, par des variations des paramètres de fonctionnement de l'accouplement fluidique (55) pour modifier la vitesse de rotation d'entraînement du précompresseur (20), la pré-pression générée par le précompresseur (20) de telle sorte que le moteur à combustion interne soit plus fortement chargé ou déchargé.
